# EUROPEAN PATENT APPLICATION

(11) **EP 2 592 560 A1**
(43) Date of publication of application: **15.05.2013**
(21) Application number: 12188722.8
(22) Date of filing: 16.10.2012
(51) Int. Cl.: G06F 12/14, G06F 21/00, G06F 21/62

(54) **Data security method using database engine**

(30) Priority: 03.11.2011 KR 20110114196
(71) Applicant: Penta Security Systems, Inc., Youngdeungpo-ku Seoul 150-949 (KR)
(72) Inventor: Kim, Duk-Soo, Seoul (KR); Lee, Seok-Woo, 432-1096 Seoul (KR); Kim, Eui-Seok, Seoul (KR); Jung, Tae-Joon, Seoul (KR)
(74) Representative: Ullrich & Naumann

(57) **Abstract**

Disclosed is a data security method in a database engine. A data security engine unit is provided in the database engine so that the data security engine unit performs a data security function while automatically converting queries, which were stored in data storage engine unit without having been encoded and which were used to perform input or inquiry on the source data, to queries to be used to perform input or inquiry on encoded data. A data management engine unit performs operations associated with the input or inquiry with respect to the source data. A data storage engine unit stores encoded data which is encoded from the source data by the data security engine unit.

## Description

### BACKGROUND OF THE INVENTION

### Field of the Invention

The present invention relates, in general, to a data security method in a database server, using a database engine with an improved data security function.

### Description of the Related Art

Generally, a database server has been widely used for the exchange of information via network communication or for systematic management of a great quantity of information.

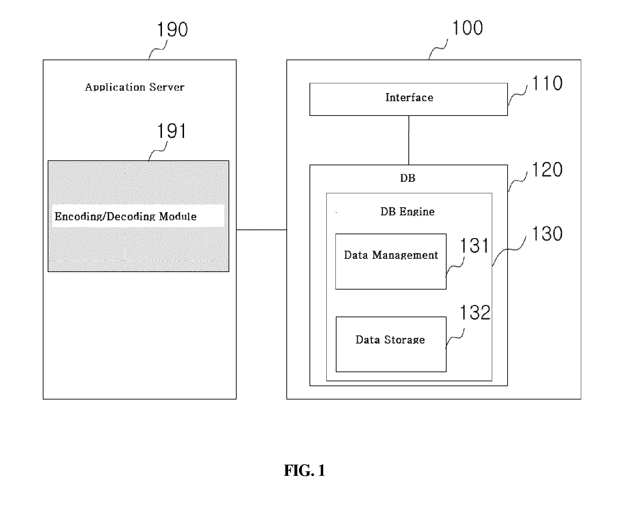

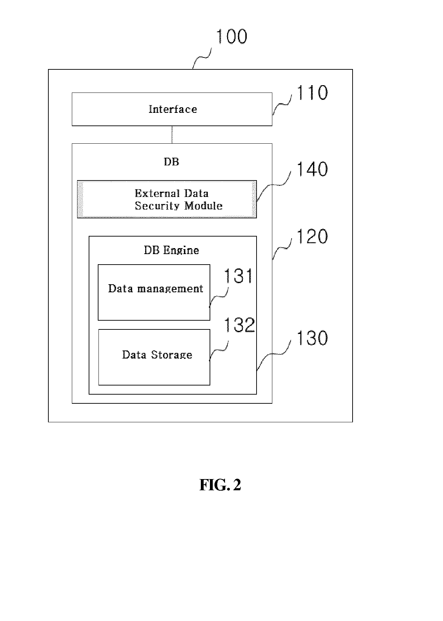

FIG. 1 shows the construction of a conventional database server which employs an application server equipped with an encoding/decoding module, and FIG. 2 shows the construction of a conventional database server which employs an external data security module.

Here, the database server 100 serves to store data therein, and includes an interface 110 which communicates with external devices, and a database 120 which practically manages data.

The database 120 includes not only a physical space for storing data, but also a database engine 130 for performing a variety of tasks associated with data.

As shown in FIG. 1, the database engine 130 includes a data management engine unit 131 which performs data associated operations, and a data storage engine unit 132 that is a space for storing data.

Since the database server 100 contains sensitive information such as personal data, data security is very important in order to safely protect data.

Exemplary data security methods include data encoding, access control to a database, monitoring sensitive data, etc.

Such data security methods may generally be adapted using either the application server 190 shown in FIG. 1 which is equipped with the encoding/decoding module 191 or the external data security module 140 which is built in the database server 100 as shown in FIG. 2.

Two data security methods will now be described.

The first method is a method (API) in which the encoding/decoding module 191 is installed to the application server 190 to encode data. The application server 190 sends a request for a query to the database 120 to input/inquire data.

The method using the encoding/decoding module 191 performs encoding/decoding by inserting encoding/decoding functions into the query from the application server 190.

Thus, the method using the encoding/decoding module 191 provided in the application server 190 has advantages of no additional load that may be generated by encoding/decoding in the database 120.

However, such a method using the encoding/decoding module 191 also has problems in that it is impossible for the database 120 to support functions of access control to encoded data and of monitoring encoded data, and all the queries associated with encoded data should be found one by one in an existing application server and then be corrected manually.

The second method is a method that performs the security function using the external security module 140 (plug-in). The elements of the module are configured external of the database engine 130. That is, the external security module 140 is a module that is configured in the database server 100, but externally to the database engine 130.

This method using the external data security module 140 was developed to overcome the problems with the first method, in which the encoding/decoding module is mounted to the application server 190, such that in order to compatamize existing queries without change even after encoding, View and Trigger that are functions of the database are used.

The operation of this method is such that when the database 120 receives a request for existing queries on encoded data, the trigger automatically performs encoding/decoding of data so that source data is displayed using the view. However, in case of performing the encoding/decoding using the view and trigger, the queries having a number of inquiries about data experience many encoding/decoding, so that response speed considerably decreases compared to that before the encoding.

Thus, in order to solve this problem of reduced response speed, a correction is needed such that such queries take data directly from encoding table and perform encoding/decoding using encoding/decoding functions in the queries, without using the view and trigger.

Thus, the method using the external data security module 140 has drawbacks that while unlike the first method in which the encoding/decoding module is installed to the application server, there is no need to correct all the queries associated with encoded data, some queries having a number of inquiries about data should be corrected manually such that they contain encoding/decoding functions.

That is, in case of the method using the external data security module 140, some queries need optimization and thus a correction in the queries is unavoidable.

### SUMMARY OF THE INVENTION

Accordingly, the present invention has been made keeping in mind the above problems occurring in the related art, and the present invention is intended to propose a data security method in which a data security engine unit is built in a database engine so that it is capable of performing a data security function.

In order to achieve the above object, according to one aspect of the present invention, there is provided a data security method in a database server including: a database configured to manage data using a database engine including a database security engine unit; and an interface configured to transmit, to the database, source data transmitted from an external device, or transmit, to the external device, source data transmitted from the database, wherein a data security function is performed on the source data by the data security engine unit.

According to the construction, the present invention is configured such that the database security engine unit is provided in the database engine so that it performs the data security function, having effects of fast, excellent performance as compared to a conventional database server, which includes a database server that communicates with a separate data security device external of the database server, and an external data security module separate from a database engine.

### BRIEF DESCRIPTION OF THE DRAWINGS

The above and other objects, features and advantages of the present invention will be more clearly understood from the following detailed description when taken in conjunction with the accompanying drawings, in which:
FIG. 1 is a view showing the construction of a conventional database server which employs an application server equipped with an encoding/decoding module;
FIG. 2 is a view showing the construction of a conventional database server which employs an external data security module;
FIG. 3 is a view showing the construction of a database server to which a data security method is adapted according to a first embodiment of the present invention;
FIG. 4 is a view showing the construction of a database server to which a data security method is adapted according to a second embodiment of the present invention;
FIG. 5 is a view showing the construction of a database server to which a data security method is adapted according to a third embodiment of the present invention;
FIG. 6 is a view showing the construction of a database server to which a data security method is adapted according to a fourth embodiment of the present invention;
FIG. 7 is a view showing the construction of a database server to which a data security method is adapted according to a fifth embodiment of the present invention; and
FIG. 8 is a view showing the construction of a database server to which a data security method is adapted according to a sixth embodiment of the present invention.

### DETAILED DESCRIPTION OF THE INVENTION

Reference will now be made in greater detail to a preferred embodiment of the invention, an example of which is illustrated in the accompanying drawings. Wherever possible, the same reference numerals will be used throughout the drawings and the description to refer to the same or like parts.

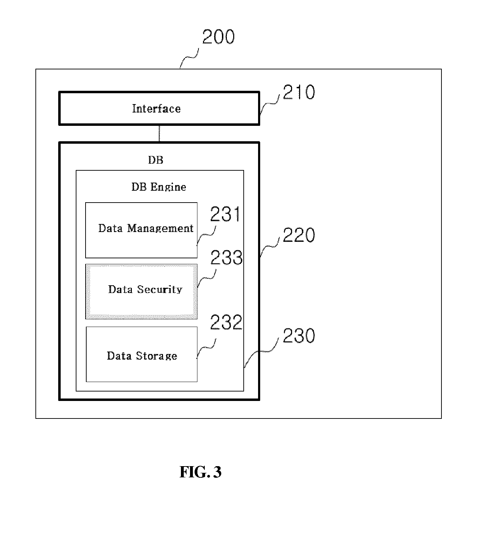

FIG. 3 is a view showing the construction of a database server to which a data security method is adapted according to a first embodiment of the present invention.

When data that was encoded (hereinafter referred to as 'encoded data') is stored in a database server, if a method that still uses queries to input/inquire source data is employed, input/inquired are not source data, but encoded data, so that normal data cannot be output.

Thus, a complicated task is needed so that encoding/decoding functions should be manually included one by one in the queries associated with encoded data.

In order to simplify a complex process of compatamizing queries, as previously described in the description of the related art, the encoding/decoding module 191 (FIG. 1) or the external data security module 140 (FIG. 2) was employed.

Here, such a method using the encoding/decoding module 191 built in the application server 190 as shown in FIG. 1 has problems in that all the queries associated with encoded data should be found one by one in the existing application server and then be corrected manually.

Further, in case of the method in which the external security module 140 and the database engine 130 are built in a single database server as shown in FIG. 2, although there is no need to correct all the queries associated with encoded data, some queries having a number of inquiries about data should be corrected manually such that they contain encoding/decoding functions.

As shown in FIG. 3, a database server to which a data security method to solve these problems according to the first embodiment is adapted includes a database 220 which is configured to manage data using a database engine 230, and an interface 210 which is configured to transmit, to the database, source data transmitted from an external device, or transmit, to the external device, source data transmitted from the database.

The interface 210 serves to relay the communication between the external device and the database, wherein the external device may be personal computers (PCs) or servers having a variety of functions.

The database 220 serves to substantially manage data, and includes the database engine 230 for performing actual management of data.

The database engine 230 includes a data management engine unit 231 for performing operations on input or inquiry of source data, a data security engine unit 233 for performing a data security function, and a data storage engine unit 232 for storing encoded data which is generated by the data security engine for encoding source data.

First, the data management engine unit 231 is configured to communicate with external devices via the interface 210 so as to transmit, to the data security engine unit 233, source data transmitted from the external devices, or transmit, to the external devices, source data inquired from the data storage engine unit 232.

Second, the data storage engine unit 232 provides a storage space in which encoded data encoded by the data security engine unit 233 can be actually stored.

Finally, the data security engine unit 233 serves to perform a data security function. Here, the data security function includes a function of encoding source data, generating encoded data, a function of access control to the data storage engine unit 232, and a function of monitoring sensitive data.

That is, the data security engine unit 233 may serve to: encode source data transmitted from the external devices via the interface 210 and then transmit the encoded data to the data storage engine unit 232; perform access restriction when there is a request for access to the data storage engine unit 232 from external devices that are not approved; when there is a request for inquiry about sensitive data stored in the data storage engine unit 232 from the external devices, check the legitimacy of the request and transmit corresponding data to the external devices; or store a record of access to sensitive data and monitor the sensitive data.

The configuration of the method of the first embodiment is such that the data security engine unit 233 is provided in the database engine 230 so that it performs automatic encoding/decoding of data, so that the method provides a fast computing speed (fast response speed). Further, since the method does not need a separate correction of queries, the method also provides complete compatibility with existing queries.

Such characteristics of the present invention will now be described in detail.

The first embodiment of the invention is configured such that source data is encoded and stored in the data storage engine unit 232 by the data security engine unit 233 which is built in the database engine 230, together with the data management engine unit 231, and the encoded data stored in the data storage engine unit is decoded and transmitted to the external devices, thereby not requiring a separate correction of queries that are a language for use in input/output of data.

Additionally, in a state where source data having been encoded are stored in the data storage engine unit 232, even though queries to input/inquire source data are used as they are, the data encoding engine automatically converts the queries to input/inquire source data in correspondence with the encoding method, thereby extracting encoded data, so that the source data that a user desires can be normally output.

Thus, the method of the first embodiment provides a fast response speed of queries relative to that of the method using the application server (equipped with the encoding/decoding module) separate from the database server and that of the method using the external data security module that is provided in the database server separate from the database engine.

Further, since the data security engine unit 233 being built in the database engine 230 is in charge of a data security function, a query to encode source data and input it to the data storage engine unit and a query to inquire the encoded data can be automatically converted. Thus, in the method of the first embodiment, the two types of queries can be used while being completely compatible with each other. That is, a user can use the query that was used to input or inquire source data before encoded by the data security engine unit in order to input or inquire the data that was encoded by the data security engine unit to inquire the source data stored in the data storage engine unit.

That is, in the first embodiment which employs the data security engine unit built in the database engine, the data security engine unit performs automatic encoding/decoding of encoded data, thereby providing the compatibility in that the source data stored in the data storage engine unit can be normally inquired without converting existing queries that were used before encoding/decoding.

In brief, characteristics of the invention are as follows:

First, the first embodiment is characterized by a fast response speed of queries, because there is no need to communicate with the application server or the data security device externally provided for a security process.

Second, the first embodiment is also characterized by the provision of complete compatibility without a correction of queries, because it has an automatic encoding/decoding function so that its computing speed is faster than that of view-trigger mode.

That is, while after data encoding, there is a need to convert the source data, according to the first embodiment using the data security engine unit 233 in the database engine 230, the data security engine unit 233 performs automatic conversion of the encoded data and the processing speed is even faster than the processing speed obtained by the external security module, thereby not requiring a correction of existing queries even after encoding, and providing a faster response speed of queries.

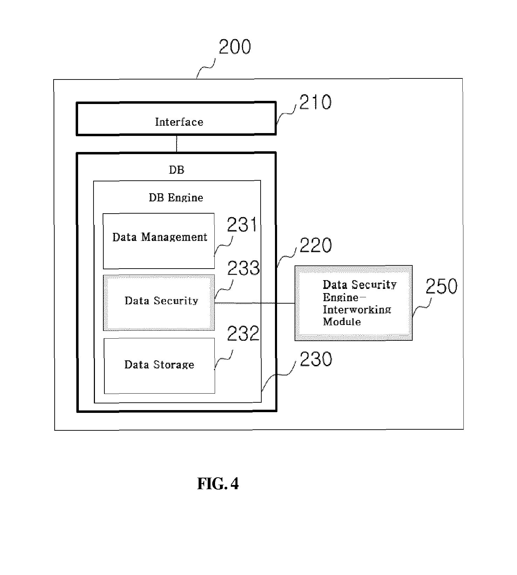

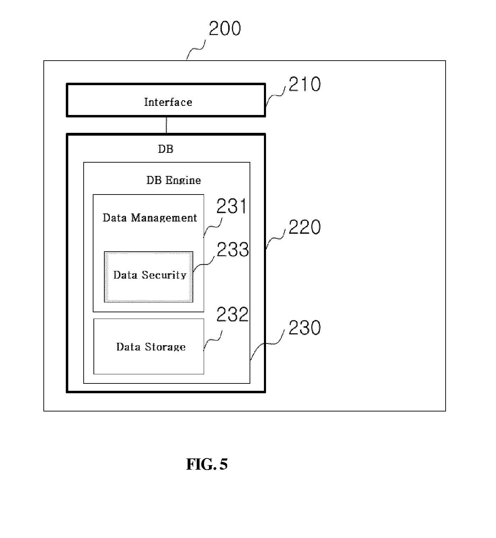

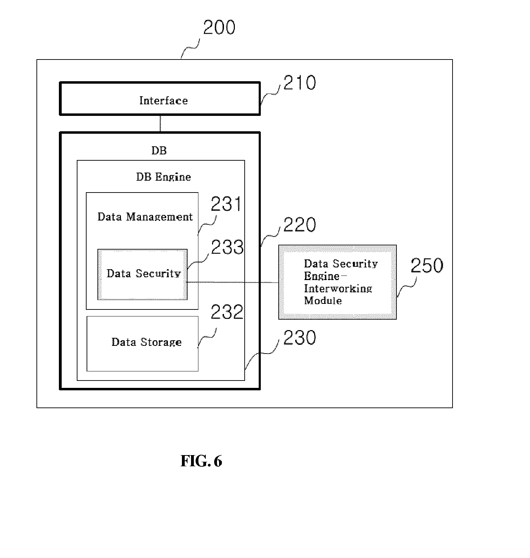

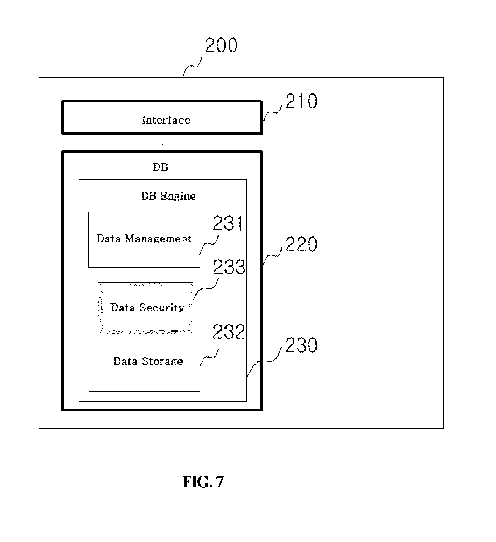

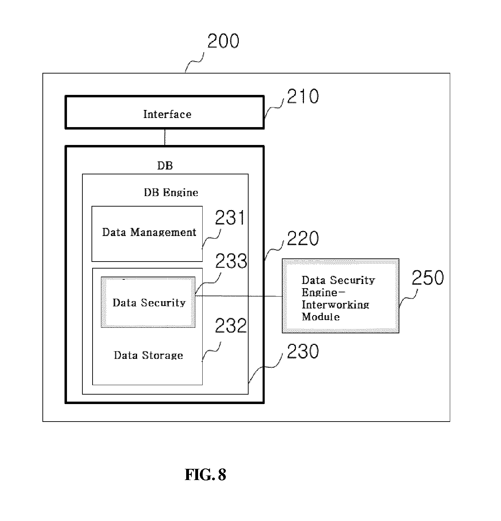

FIG. 4 is a view showing the construction of a database server to which a data security method is adapted according to a second embodiment of the present invention, FIG. 5 is a view showing the construction of a database server to which a data security method is adapted according to a third embodiment of the present invention, FIG. 6 is a view showing the construction of a database server to which a data security method is adapted according to a fourth embodiment of the present invention, FIG. 7 is a view showing the construction of a database server to which a data security method is adapted according to a fifth embodiment of the present invention, and FIG. 8 is a view showing the construction of a database server to which a data security method is adapted according to a sixth embodiment of the present invention.

The database server 200 to which the data security method of the invention is adapted includes the data security engine unit 233 in the database engine 230 of the database 220, wherein the data security engine unit 233 serves to perform a data security function.

The database server 200 may be classified into following six types according to the configuration of the data security engine unit 233.

As shown in FIG. 3, the database server 200 to which the data security method according to the first embodiment is adapted includes a data management engine unit 231, a data storage engine unit 232, and a data security engine unit 233 in a database engine 230. That is, the data security engine unit 233 performs the data security function while being separate from the data management engine unit 231 and the data storage engine unit 232.

As shown in FIG. 4, the database server 200 to which the data security method according to the second embodiment is adapted is configured such that the data security engine unit 233 is provided separate from the data management engine unit 231 and the data storage engine unit 232, a data security engine-interworking module 250 is provided external of the database 220, and the data security engine unit 233 and the data security engine-interworking module 250 together perform the data security function.

As shown in FIG. 5, the database server 200 to which the data security method according to the third embodiment is adapted is configured such that the data security engine unit 233 is provided in the data management engine unit 231 to perform the data security function.

As shown in FIG. 6, the database server 200 to which the data security method according to the fourth embodiment is adapted is configured such that the data security engine unit 233 is provided in the data management engine unit 231, the data security engine-interworking module 250 is provided external of the database 220, and the data security engine unit 233 and the data security engine-interworking module 250 together perform the data security function.

As shown in FIG. 7, the database server 200 to which the data security method according to the fifth embodiment is adapted is configured such that the data security engine unit 233 is provided in the data storage engine unit 232 so as to perform the data security function.

As shown in FIG. 8, the database server 200 to which the data security method according to the sixth embodiment is adapted is configured such that the data security engine unit 233 is provided in the data storage engine unit 232, the data security engine-interworking module 250 is provided external of the database, and the data security engine unit 233 and the data security engine-interworking module 250 together perform the data security function.

That is, since the database server to which the data security method according to the present invention is adapted uses the database engine, the determination of encoded data and performance of encoding/decoding all are automatically implemented in the data security engine.

Further, the speed of encoding/decoding is also faster than that of the conventional database server.

Since the speed of encoding/decoding is very fast, complete compatibility is ensured in which no correction is required for queries before encoding.

Thus, according to the present invention, the encoding/decoding speed is very fast, and the encoding/decoding is automatically performed in the database engine, so that conventional problems about the compatibility of existing queries and reduction in the response speed can be resolved.

It will be appreciated by those skilled in the art that the present invention may be implemented in a variety of different forms without change in the technical spirit or essential features of the invention. It should be understood that embodiments described herein are provided not for limitation, but for illustration. The scope of the present invention may be defined by appended claims rather than the detailed description, and it should be construed to include all changes or modified forms derived from meaning and scope of claims and equivalents thereof.

## Claims

1. A data security method in a database server comprising:
a database configured to manage data using a database engine; and an interface configured to transmit, to the database, source data transmitted from an external device, or transmit, to the external device, source data transmitted from the database, wherein a data security engine unit is provided in the database engine, together with a data management engine unit and a data storage engine unit, the method comprising:
performing, by the data security engine unit, a data security function on the source data, while automatically converting queries, which were used to perform input or inquiry on the source data which were stored in data storage engine unit without having been encoded, to queries to be used to perform input or inquiry on encoded data;
performing, by the data management engine unit, operations associated with the input or inquiry with respect to the source data; and
storing, by the data storage engine unit, encoded data which is encoded from the source data by the data security engine unit.

2. A data security method in a database server including:
a database configured to manage data using a database engine; a data security engine-interworking module communicating with the database; and an interface configured to transmit, to the database, source data transmitted from an external device, or transmit, to the external device, source data transmitted from the database, wherein a data security engine unit is provided in the database engine, together with a data management engine unit and a data storage engine unit, the method comprising:
performing, by the data security engine unit, a data security function together with the data security engine-interworking module, while automatically converting queries, which were used to perform input or inquiry on the source data which were stored in data storage engine unit without having been encoded, to queries to be used to perform input or inquiry on encoded data;
performing, by the data management engine unit, operations associated with the input or inquiry with respect to the source data; and
storing, by the data storage engine unit, encoded data which is encoded from the source data by the data security engine unit.

3. The data security method as set forth in claim 1, wherein when provided in the data management engine unit, the data security engine unit performs the data security function.

4. The data security method as set forth in claim 2, wherein when provided in the data management engine unit, the data security engine unit performs the data security function.

5. The data security method as set forth in claim 1, wherein when provided in the data storage engine unit, the data security engine unit performs the data security function.

6. The data security method as set forth in claim 2, wherein when provided in the data storage engine unit, the data security engine unit performs the data security function.

7. The data security method as set forth in claim 1 or 2, wherein the data security function is configured to: encode source data transmitted from the external devices via the interface; decode the encoded data; perform access restriction when there is a request for access from external devices that are not approved; when there is a request for inquiry about sensitive data from the external devices, check the legitimacy of the request and transmit corresponding data to the external devices; or store a record of access to sensitive data and monitor the sensitive data.
